# EUROPEAN PATENT SPECIFICATION

(11) **EP 1 098 937 B1**
(45) Date of publication and mention of the grant of the patent: **05.02.2003**
(21) Application number: 99913764.9
(22) Date of filing: 29.03.1999
(51) Int. Cl.: C08L 95/00, C09D 195/00, C09J 195/00

(54) **A METHOD FOR MANUFACTURING GRANULATED MASTIC ASPHALT**
VERFAHREN ZUR HERSTELLUNG VON GRANULIERTEM GUSSASPHALT
PROCEDE POUR FABRIQUER UN MASTIC ASPHALTIQUE GRANULE

(30) Priority: 02.04.1998 NO 981494
(43) Date of publication of application: 16.05.2001
(73) Proprietor: NCC Norge AS NCC Asfalt, Brakeroeya, 3002 Drammen (NO)
(72) Inventor: WENTZEL, Jarle, N-3001 Drammen (NO)
(74) Representative: Kyle, Diana
(86) International application number: NO9900104
(87) International publication number: WO99051678

(56) References cited:
- WO-A1-97/24410
- GB-A- 1 494 279

## Description

The present invention relates to a method for manufacturing granular mastic asphalt, in which filler and heated aggregate, in a first stage, are mixed with a partial amount of 15 - 25 % by weight of bitumen preheated into a liquid state, and the mixture allowed to cool to ambient temperature to form a granular semifinished product, whereupon the said semifinished product, in a second stage, is mixed with a remaining amount of bitumen heated into a liquid state, to form a granular mastic asphalt end product. Such mastic granular is primarily intended for use as a protective coating over welded seams between pipe sections in subsea pipelines, particularly for conveying hydrocarbons. However, it is suitable also in other applications where there is a need for transporting mastic asphalt in a cold state over longer distances.

The word "filler" is the technical term used to denote rock flour or stone dust, while "aggregate" is the technical term denoting mineral materials in the form of crushed rock, sand, etc.

GB patent 334 588 discloses a method for preparing mastic asphalt in blocs, intended for use as an ordinary paving asphalt. Here, firstly a coarse aggregate fraction is mixed with bitumen, then a fine aggregate fraction is added, optionally together with a remaining amount of bitumen, and finally filler material. The entire operation is performed in one stage without any intermediate cooling, and the resulting product is in the form of blocks - not granular. GB patent 1 494 279, like the above GB 334 588, discloses a method of fabricating mastic asphalt in the form of solid blocks, where the essential aspect is the choice of the proportional amounts of the various components, bitumen, filler and aggregate, and the particle size of the latter.

A method of the introductorily stated kind, for the manufacture of granular mastic asphalt, is known from PCT patent application, publication no. WO 97/24410. The mastic asphalt product resulting from this prior method is an improvement of the mastic asphalt product described in GB 1 494 279, the improvement being that the product according to the PCT application appears in the form of a granular which, compared to the bloc-shaped mastic asphalt, requires less consumption of energy in manufacture and is more easily handled in use, such as described in the latter document. A drawback of this prior method, however, is a non-uniform composition of the mastic asphalt granular, tending to result in the formation of lumps.

It has now surprisingly been found that the above drawback of the technique according to the PCT application is practically eliminated by retaining, in the first mixing stage, not only a partial amount of the total amount of bitumen, but also a partial amount of 15 - 25 % by weight of the total amount of filler to be contained in the end product, as stated more fully in the appending claim 1. Thereby the undesirable lumping tendency is obviated and the ease of handling is correspondingly improved. More particularly, the method according to the present invention possesses the following advantages over the prior art according to the above PCT application:
- Better coating of the material of the semifinished product, with less filler in the aggregate.
- Better distribution of the filler in the granular, because the suspension acts as a binder and is uniformly distributed on the material of the semi-finished product.
- There will be no pure binder in the surface of the mastic asphalt granular, whereby the stickiness of the granular is considerably reduced and its storing capacity correspondingly improved. This is a significant advantage since the granular is normally supplied in 800 kg sacks stacked above each other.

In an embodiment of the method according to the invention, using a bitumen partial amount of 15-25% by weight of the total amount of bitumen in the first mixing stage, a filler partial amount of 15-30% by weight of the total amount of filler is used.

According to an advantageous feature of the method according to the invention, PBS ("Phonix Bitumen Stabilizer", a synthetic amid polymer) is added to the bitumen/filler suspension in the proportion 2 - 5, preferably about 3% of the total amount of bitumen, raising the softening point of the bitumen from 85 to 110°C, and lowering the processing temperature from 200 to 180°C. This results in less consumption of energy for heating purposes and quicker setting after grouting of the mastic asphalt.

Preferably the mixing is performed in the second stage as a continuous process in which bitumen/filler suspension is sprayed onto a stream of semi-finished product.

Preferably water is added to the semifinished product in the second stage, in an amount of 0.5-1.5% by weight of the semifinished product. This results firstly in a foaming effect owing to the evaporation of the water impinging the hot bitumen thereby improving the dispersion of the semifinished product granules in the bitumen suspension and thus an improved coating of bitumen on the granules, and secondly a cooling effect lowering the temperature during the mixing process to below the bitumen softening point, with the result that individual granules in the granular end product are less sticky, with less tendency to lump formation.

The invention will now be described in more detail.

Generally the procedure when manufacturing the granular mastic asphalt according to the invention is as follows.

A semifinished product is prepared consisting of 90 - 95% aggregate, 2 - 5% filler and 2 - 4% bitumen, all percentages (also in the preceding as well as the succeeding description) being based on weight.

The preparation of the semifinished product is performed in a conventional manner by heating the aggregate including the filler and mixing it with hot, liquid bitumen. The mixture is then allowed to cool to ambient temperature (air temperature).

After cooling the mixture, owing to its relatively low content of bitumen, will appear in the form of a homogenuous granular.

The end product, i.e. mastic asphalt in the form of granules, is then prepared by mixing the semifinished product with a suspension of hot bitumen and filler in a weight ratio of about 1:1 (50/50%). The proportional amount of semifinished product and suspension is adjusted to provide a mixture containing a total of about 69% aggregate, 16% filler and 15% bitumen.

Preferably, PBS is added to the suspension in an amount of about 3% of the total amount of bitumen. It will then suffice to keep the temperature of the suspension at about 180°C, in contrast to 200°C without PBS.

The mixture of semifinished product and bitumen/filler suspension is preferably carried out by dispensing the granular semifinished product, optionally with water added to it, as a continuous stream into a mixer in which a hot bitumen/filler suspension is sprayed onto the granular stream.

A such continuous mixing process, i.e. spraying the remaining proportion of bitumen/filler in the form of a suspension onto the continuous stream of granular semifinished product, further assists in securing a homogenuous granular semi-finished product.

It is generally well-known technique within the art of mixing, to mix particle and liquid substances in a continuous process as described above, and therefore there is no need for a detailed description of the mixer per se. Any suitable mixer could be used. Also belonging to well-known mixing technique that need not need any further description herein, is the proportional dispensing of semifinished product and bitumen/filler suspension in a such continuous process for achieving the above stated percentage weight proportion of aggregate, filler and bitumen.

Although the mixing of semifinished product and bitumen/filler suspension preferably is carried out as a continuous process as described above, it is within the purview of the invention to mix the ingredients i.e. semifinished product and suspension, in any other way, such as by a continuous or batch mixing process using a stirrer or the like.

### Example

92.5% aggregate in the form of Ansit with a particle size of 0.075 - 5mm is heated to between 140°C and 160°C, e.g. about 150°C, and is mixed in an asphalt plant with 4% filler in the form of Ansit of particle size 0 - 75 µm and 3.5% bitumen at about 90°C. The mixture is then dropped on the ground to be cooled while turned around by means of a grab.

A suspension is prepared consisting of bitumen and filler in the proportion 1:1, mixed in a vessel by means of a stirrer effectively maintaining the mixture in a homogenuous state. 3% PBS based on the total weight of bitumen is added to the suspension. The mixing temperature of the suspension is about 180°C.

Semifinished product at air temperature, together with about 1% by weight of water, is dosed as a continuous stream into a mixing device in which bitumen/filler suspension at about 180°C is sprayed onto the granular flowing through the mixing device.

The end product exiting the mixing device as a continuous stream, is in the form of a granular containing about 69% by weight of aggregate, about 16% by weight of filler and about 15% by weight of bitumen.

## Claims

1. A method for manufacturing granular mastic asphalt, in which filler and heated aggregate, in a first stage, are mixed with a partial amount of bitumen of 15 - 25 % by weight of the total amount of bitumen, preheated into a liquid state, and the mixture allowed to cool to ambient temperature to form a granular semifinished product, whereupon the semifinished product, in a second stage, is mixed with a remaining amount of bitumen heated into a liquid state, to form a granular mastic asphalt end product, **characterised in that** only a partial amount of filler material of 15 - 30 % by weight of the total amount of the filler material in the end product is added in the first mixing stage, and that the remaining amount of bitumen is mixed with the remaining amount of the filler material to form a suspension that is mixed with the semifinished product in said second stage.

2. A method according to claim 1, **characterised by** adding, in the second stage, PBS in an amount of 2 - 5, preferably about 3% by weight of the total amount of bitumen.

3. A method according to claims 1 or 2, **characterised by** carrying out the mixing in said second stage as a continuous process in which the bitumen/filler suspension is sprayed onto a stream of semifinished product.

4. A method according to any one preceding claim, **characterised by** adding water to the semifinished product in the second stage, in an amount of about 0.5 - 1.5% by weight of the semifinished product.

5. A method for manufacturing granular mastic asphalt, in which the following components are mixed:
(a) a granular semifinished product obtainable by mixing heated aggregate, a partial amount of bitumen of 15 - 25% by weight of the total amount of bitumen, preheated into a liquid state, and a partial amount of filler of 15 - 30% by weight of filler, and
(b) a suspension comprising the remaining amount of bitumen, heated into a liquid state, and the remaining amount of filler.

## Revendications

1. Procédé pour fabriquer un mastic asphaltique granulaire, dans lequel une charge et un agrégat chauffé, dans une première étape, sont mélangés avec une quantité partielle de bitume représentant 15-25 % en poids de la quantité totale de bitume, préchauffés dans un état liquide, et le mélange est laissé refroidir à la température ambiante pour former un produit semi-fini granulaire, après quoi le produit semi-fini, dans une deuxième étape, est mélangé avec une quantité restante de bitume chauffé dans un état liquide, pour former un produit final de mastic asphaltique granulaire, **caractérisé en ce que** seule une quantité partielle de matériau de charge, représentant 15-30 % en poids de la quantité totale du matériau de charge dans le produit final, est ajoutée dans la première étape de mélange, et **en ce que** la quantité restante de bitume est mélangée avec la quantité restante du matériau de charge pour former une suspension qui est mélangée avec le produit semi-fini dans ladite deuxième étape.

2. Procédé selon la revendication 1, **caractérisé par** l'addition, dans la deuxième étape, de PBS en une quantité de 2-5, de préférence d'environ 3 % en poids de la quantité totale de bitume.

3. Procédé selon la revendication 1 ou 2, **caractérisé par** la mise en oeuvre du mélange dans ladite deuxième étape en un procédé continu dans lequel la suspension de bitume/charge est pulvérisée sur un courant de produit semi-fini.

4. Procédé selon l'une quelconque des revendications précédentes, **caractérisé par** l'addition d'eau au produit semi-fini dans la deuxième étape, en une quantité d'environ 0,5-1,5 % en poids du produit semi-fini.

5. Procédé pour fabriquer un mastic asphaltique granulaire, dans lequel les composants suivants sont mélangés :
(a) un produit semi-fini granulaire pouvant être obtenu par mélange d'agrégat chauffé, d'une quantité partielle de bitume représentant 15-25 % en poids de la quantité totale de bitume, préchauffée dans un état liquide, et d'une quantité partielle de charge représentant 15-30 % en poids de la charge, et
(b) une suspension comprenant la quantité restante de bitume, chauffée dans un état liquide, et la quantité restante de charge.

## Patentansprüche

1. Verfahren zur Herstellung von granuliertem Gussasphalt, wobei in einer ersten Stufe Füllstoff und erhitzte Zuschläge mit einer partiellen Menge Bitumen von 15 bis 25 Gew.-% der Gesamtmenge des Bitumens, das zu einem flüssigen Zustand vorgeheizt ist, gemischt und das Gemisch auf Umgebungstemperatur abkühlen gelassen wird, so dass ein granuläres halbfertiges Produkt entsteht, woraufhin das halbfertige Produkt in einer zweiten Stufe mit einer restlichen Menge Bitumen, das zu einem flüssigen Zustand erhitzt ist, gemischt wird, so dass ein granulärer Gussasphalt als Endprodukt entsteht, **dadurch gekennzeichnet, dass** in der ersten Mischstufe nur eine partielle Menge des Füllstoffs von 15 bis 30 Gew.-% der im Endprodukt vorhandenen Gesamtmenge des Füllstoffs hinzugefügt wird und dass die restliche Menge des Bitumens mit der restlichen Menge des Füllstoffs gemischt wird, so dass eine Suspension entsteht, die in der zweiten Stufe mit dem halbfertigen Produkt gemischt wird.

2. Verfahren gemäß Anspruch 1, **dadurch gekennzeichnet, dass** in der zweiten Stufe PBS in einer Menge von 2 bis 5, vorzugsweise etwa 3, Gew.-% der Gesamtmenge des Bitumens hinzugefügt wird.

3. Verfahren gemäß den Ansprüchen 1 oder 2, **dadurch gekennzeichnet, dass** das Mischen in der zweiten Stufe als kontinuierliches Verfahren durchgeführt wird, bei dem die Bitumen/Füllstoff-Suspension auf einen Strom aus halbfertigem Produkt gesprüht wird.

4. Verfahren gemäß einem der vorstehenden Ansprüche, **dadurch gekennzeichnet, dass** in der zweiten Stufe Wasser in einer Menge von etwa 0,5 bis 1,5 Gew.-% des halbfertigen Produkts zu dem halbfertigen Produkt gegeben wird.

5. Verfahren zur Herstellung von granuliertem Gussasphalt, wobei die folgenden Komponenten miteinander gemischt werden:
(a) ein granuläres halbfertiges Produkt, das durch Mischen von erhitzten Zuschlägen, einer partiellen Menge des Bitumens von 15 bis 25 Gew.-% der Gesamtmenge des Bitumens, das zu einem flüssigen Zustand vorgeheizt ist, und einer partiellen Menge des Füllstoffs von 15 bis 30 Gew.-% des Füllstoffs erhältlich ist; und
(b) eine Suspension, die die restliche Menge des Bitumens, das zu einem flüssigen Zustand erhitzt ist, und die restliche Menge des Füllstoffs umfasst.
